# EUROPEAN PATENT APPLICATION

(11) **EP 1 132 227 A2**
(43) Date of publication of application: **12.09.2001**
(21) Application number: 01105653.8
(22) Date of filing: 07.03.2001
(51) Int. Cl.: B60H 1/00

(54) **Air conditioner for vehicle**

(30) Priority: 10.03.2000 JP 2000067574
(71) Applicant: ALPS ELECTRIC CO., LTD., Tokyo 145-8501 (JP)
(72) Inventor: Murakami, Kazuyuki, Alps Electric Co., Ltd., Tokyo 145-8501 (JP)
(74) Representative: Klunker . Schmitt-Nilson . Hirsch

(57) **Abstract**

Disclosed is an air conditioner for a vehicle, capable of performing an automatic fan control on a blower (5) even when a failure or short circuit occurs in sensors. This air conditioner for a vehicle has: a blower (5) provided in an air conditioning duct; an engine speed sensor for detecting a rotational speed of an engine mounted on the vehicle; a vehicle speed sensor for detecting a speed of the vehicle; and a controller for receiving output signals from the sensors and performing an automatic fan control on the blower. The controller determines whether the engine speed is equal or higher than a predetermined value and determines whether the vehicle speed is equal to or higher than a predetermined value, in each of the case where the engine speed is equal to or higher than the predetermined value and the vehicle speed is equal to or higher than the predetermined value, the case where the engine speed is equal to or higher than the predetermined value and the vehicle speed is lower than the predetermined value, and the case where the engine speed is lower than the predetermined value and the vehicle speed is equal to or higher than the predetermined value, the automatic fan control on the blower is performed. In the case where the engine speed is lower than the predetermined value and the vehicle speed is lower than the predetermined value, the automatic fan control on the blower is stopped.

## Description

### BACKGROUND OF THE INVENTION

### Field of the Invention

The present invention relates to an air conditioner for a vehicle and, more particularly, to means for automatically controlling a blower in the case where a sensor is faulty.

### Description of the Related Art

As known, an air conditioner for a vehicle in recent years is provided with an automatic fan controller for calculating temperature of hot air or cold air blown from each outlet (outlet temperature) from temperature set by the user, and in-vehicle temperature, ambient temperature, engine water temperature, an amount of solar radiation, vehicle speed, and the like detected by sensors and automatically controlling an output of a blower installed in a duct by using the calculated outlet temperature as a parameter.

Conventionally, a control of starting the automatic fan controller is performed on the basis of only the engine speed in such a manner that, when the engine speed is equal to or higher than a predetermined value (for example, 550 rpm) , the automatic fan control is started and, when the engine speed becomes lower than the predetermined value, the automatic fan control is stopped.

In the control method, in the state where the engine is stopped, even when an ignition key is switched to an accessory switch, the automatic fan control is not start. When the passenger desires to keep the inside the vehicle quiet in a case such that the passenger listens to a radio or CD in the stopped vehicle, the blower can be automatically stopped by stopping the engine. The method has therefore an advantage that quiet state in the vehicle is maintained.

According to the control method, however, when a failure or short circuit occurs in a sensor for detecting engine speed (engine speed sensor) , although the engine rotates at rotational speed equal to or higher than the predetermined value, the automatic fan controller recognizes that the engine speed is lower than the predetermined value. Consequently, it is impossible to start the automatic fan controller. When a failure or short circuit occurs in the engine speed sensor in a state where the blower is under the automatic fan control, a problem such that an output of the blower is fixed to a predetermined minimum value occurs.

Although the case of performing the automatic fan control in response to a signal from the engine speed sensor has been described above as an example, a similar problem occurs also in the case where the automatic fan control is performed in response to a signal from another sensor.

### SUMMARY OF THE INVENTION

The invention has been achieved to solve the problems of the conventional techniques and its object is to provide an air conditioner of a vehicle, capable of performing an automatic fan control on a blower even in the case where a failure or short circuit occurs in sensors.

In order to achieve the object, according to the invention, there is provided an air conditioner for a vehicle having: a blower provided in an air conditioning duct; an engine speed sensor for detecting a rotational speed of an engine mounted on the vehicle; a vehicle speed sensor for detecting a speed of the vehicle; and a controller for receiving output signals from the sensors and performing an automatic fan control on the blower, wherein the controller determines whether the engine speed is equal or higher than a predetermined value and determines whether the vehicle speed is equal to or higher than a predetermined value, in each of the case where the engine speed is equal to or higher than the predetermined value and the vehicle speed is equal to or higher than the predetermined value, the case where the engine speed is equal to or higher than the predetermined value and the vehicle speed is lower than the predetermined value, and the case where the engine speed is lower than the predetermined value and the vehicle speed is equal to or higher than the predetermined value, the automatic fan control on the blower is started, and in the case where the engine speed is lower than the predetermined value and the vehicle speed is lower than the predetermined value, the automatic fan control on the blower is stopped.

As described above, by determining not only whether the engine speed is equal to or higher than the predetermined value but also whether the vehicle speed is equal to or higher than the predetermined value, also in the case where the engine speed is lower than the predetermined value, if the vehicle speed is equal to or higher than the predetermined value, it can be estimated that the engine rotates at a rotational speed equal to or higher than the predetermined value. Consequently, when the automatic fan control on the blower is executed in such a case, there is no problem. Moreover, also in the case where a failure or short circuit occurs in the engine speed sensor, the automatic fan control can be performed on the blower, so that warm air or cold air at a flow rate according to a calculated outlet temperature can be supplied to the inside of the vehicle. The inside of the vehicle can be therefore kept comfortable.

In place of detecting the engine speed, in each of the case of detecting a voltage generated by a dynamometer mounted on the vehicle, the case of detecting an ON signal of an ignition switch mounted on the vehicle, and the case of detecting the presence or absence of a feedback signal outputted from a load device when the ignition switch is turned on, similar actions are displayed, and the in-vehicle temperature can be kept comfortably.

It is also possible to provide determining means for determining, when the vehicle speed becomes lower than the predetermined value, whether it is due to a temporary stop during drive or a stop by stopping the engine. When the temporary stop is determined, the automatic fan control on the blower is continued, and when the stop by the engine stop is determined, the automatic fan control on the blower is stopped.

In such a manner, the automatic fan control on the blower is not interrupted each time the vehicle stops at signal lights, due to a traffic jam, or the like. Thus, the air conditioner for a vehicle which realizes more comfortable conditions can be provided.

### BRIEF DESCRIPTION OF THE DRAWINGS

Fig. 1 is a configuration diagram of a duct for air conditioning mounted on a vehicle.

Fig. 2 is a block diagram of a control section according to a first embodiment.

Fig. 3 is a flowchart showing the procedure of controlling a blower according to the first embodiment.

Fig. 4 is a block diagram showing a control section according to a second embodiment.

Fig. 5 is a flowchart showing the procedure of controlling a blower according to the second embodiment.

Fig. 6 is a block diagram of a control section according to a third embodiment.

Fig. 7 is a flowchart showing the procedure of controlling the blower according to the third embodiment.

Fig. 8 is a block diagram of a control section according to a fourth embodiment.

Fig. 9 is a flowchart showing the procedure of controlling the blower according to the fourth embodiment.

### DETAILED DESCRIPTION OF THE PREFERRED EMBODIMENTS

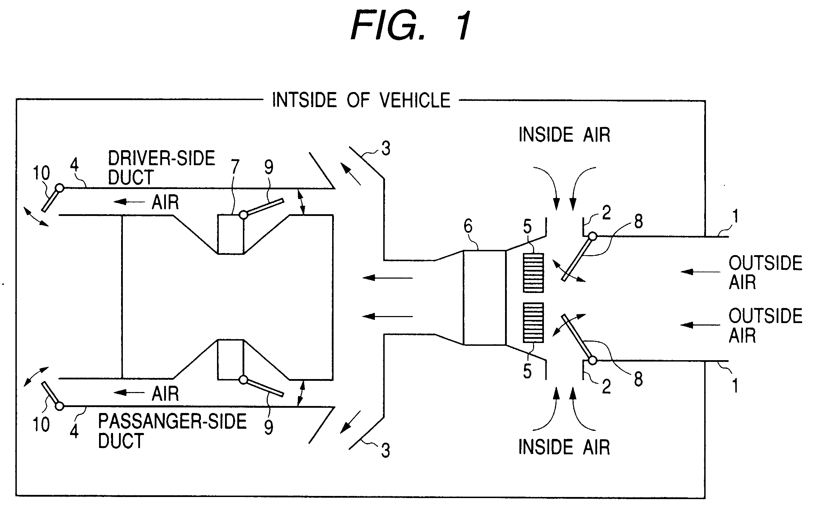

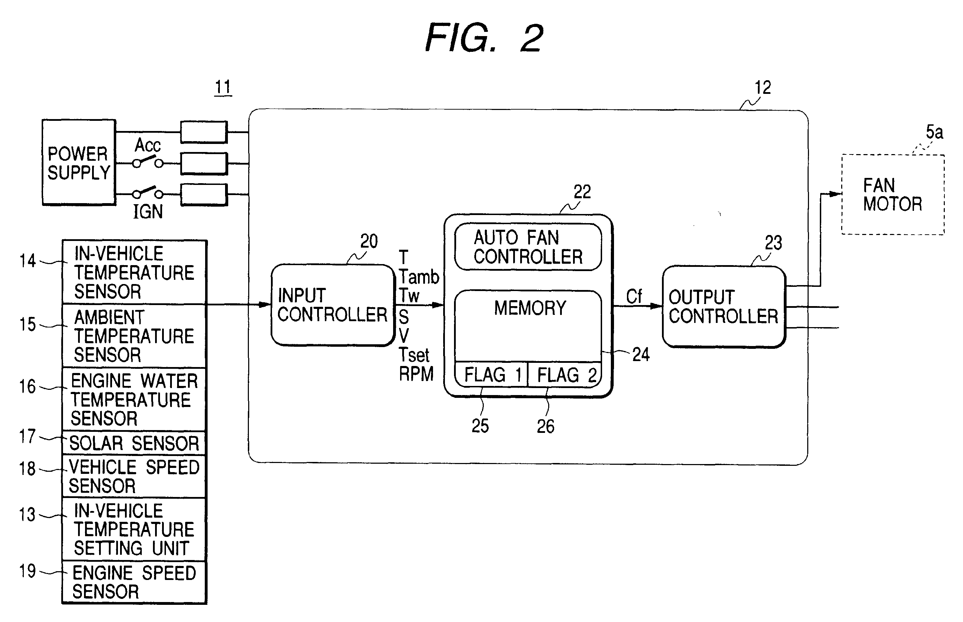

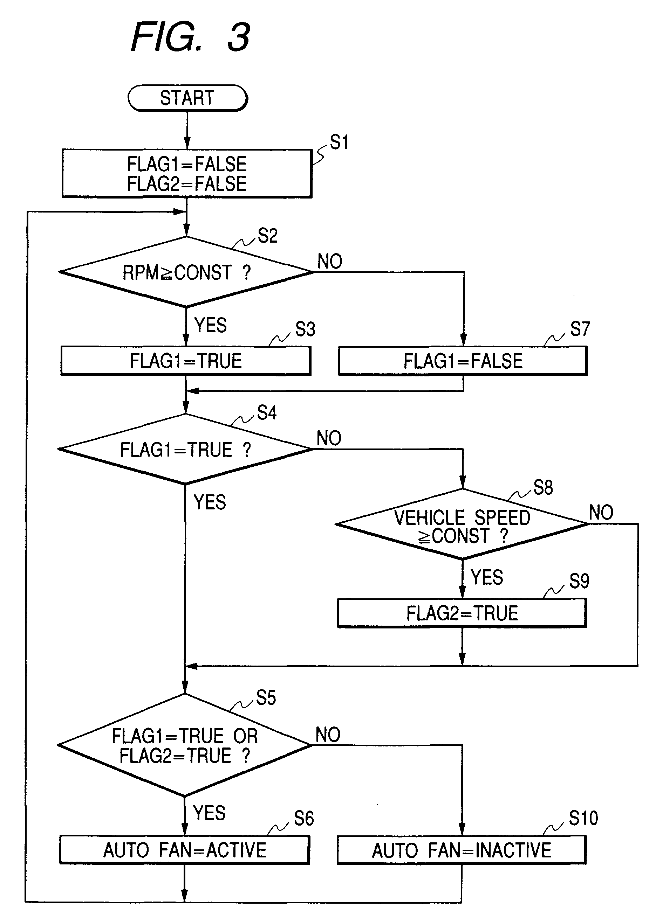

An air conditioner for a vehicle according to a first embodiment of the invention will be described hereinbelow with reference to Figs. 1 to 3. Fig. 1 is a configuration diagram of a duct for air conditioning mounted on a vehicle. Fig. 2 is a block diagram of a control section. Fig. 3 is a flowchart showing the procedure of controlling a blower.

As shown in Fig. 1, the duct for air conditioning in the embodiment is constructed by a driver-side duct and a passenger-side duct. Each of the ducts is provided with an outside-air intake 1, an inside-air intake 2, a direct outlet 3 of cold air, and an outlet 4 of cold and warm mixture air. Between the outside-air intake 1 and inside-air intake 2 and the direct outlet 3 of cold air, a blower 5 for taking the outside air or circulating the inside air and an evaporator 6 for cooling and humidifying the air blown by the blower 5 are provided. Between the blower 5 and evaporator 6 and the outlet 4 of cold and warm mixture air, a heater 7 is provided. Further, the outside-air intake 1 is provided with a recirculation flap 8 for switching the intake between the outside air and the inside air. A duct for cold and warm mixture air is provided with an air mix flap 9 for adjusting the temperature of the cold and warm mixture air. The outlet 4 of the cold and warm mixture air is provided with an outlet flap 10 for switching the direction of blowing the cold and warm mixture air toward, for example, the front, floor, defroster, and the like.

The blower 5 has a fan motor 5a (refer to Fig. 2). By controlling a control input (voltage value) applied to the fan motor 5a, the flow rate of air blown to the inside of the vehicle through the outlet can be adjusted.

As shown in Fig. 2, a control section 11 of the fan motor 5a includes a controller 12, an in-vehicle temperature setting unit 13, an in-vehicle temperature sensor 14, an ambient temperature sensor 15, an engine water temperature sensor 16, a solar sensor 17, a vehicle speed sensor 18, and an engine speed sensor 19. The controller 12 has: an input controller 20 for receiving output signals from the in-vehicle temperature setting unit 13 and the sensors 14 to 19 ; a computing unit 22 for receiving set temperature Tₛₑₜ, in-vehicle temperature T, ambient temperature T_{amb}, engine water temperature T_{w}, a sun load S, and vehicle speed V outputted from the input controller 20, calculating a drive voltage Cf of the fan motor 5a, receiving engine speed RPM and vehicle speed V outputted from the input controller 20, and turning on/off the blower 5; and an output controller 23 for outputting the drive voltage of the fan motor 5a in accordance with the output signal of the computing unit 22. The computing unit 22 has a memory 24 in which a program for controlling the blower 5 is written. In the memory 24, FLAG1 and FLAG2 setting regions 25 and 26 are provided.

The procedure of turning on/off the blower 5 while detecting the engine speed RPM and the vehicle speed V will be described hereinbelow with reference to Fig. 3.

When the ignition key of the vehicle is in an OFF state, "false" is set in both FLAG1 and FLAG2 (step S1). When the ignition key of the vehicle is operated to turn on an accessory switch ACC, the control program for the blower 5 written in the memory 24 is started, and whether the engine speed is equal to or higher than a predetermined value is determined (step S2). The predetermined value of the engine speed is set to be slightly higher than an idling speed, for example, about 550 rpm. When it is determined in step S2 that the engine speed is equal to or higher than the predetermined value, the program advances to step S3 where FLAG1 is updated to "TRUE". In step S4, whether "TRUE" is set in FLAG1 or not is determined. Since FLAG1 has been updated to "TRUE" in step S3, it is determined in step S4 that "TRUE" is set in FLAG1, and the program advances to step S5. In step S5, at least one of FLAG1 and FLAG2 is set as "TRUE" or not is determined. Since FLAG1 has been updated to "TRUE" in step S3, it is determined in step S5 that at least one of FLAG1 and FLAG2 is set as "TRUE", the program shifts to step S6 where the automatic fan control is performed on the blower 5, and the program returns to step S2. The automatic fan control on the blower 5 is carried out by calculating the outlet temperature from the set temperature Tₛₑₜ, in-vehicle temperature T, ambient temperature T_{amb}, engine water temperature T_{w}, sun load S, and vehicle speed V and obtaining a drive voltage Cf of the fan motor 5a from the outlet temperature and the difference between the outlet temperature and the set temperature Tₛₑₜ. When the engine speed is equal to or higher than the predetermined value, irrespective of the vehicle speed, the automatic fan control on the blower 5 is performed.

When it is determined in step S2 that the engine speed is lower than the predetermined value, the program shifts to step S7 where FLAG1 is updated to "FALSE". Subsequently, the program moves to step S4 where whether "TRUE" is set in FLAG1 or not is determined. Since FLAG1 has been rewritten to "FALSE" in step S7, it is determined in step S4 that "TRUE" is not set in FLAG1, and the program advances to step S8. In step S8, whether the vehicle speed is equal to or higher than the predetermined value is determined. The predetermined value of the vehicle speed is set to a value at which the vehicle speed can be detected with reliability, for example, 5 km/h. When it is determined in step S8 that the vehicle speed is equal to or higher than the predetermined value, the program advances to step S9 where FLAG2 is rewritten to "TRUE". In the following step S5, whether "TRUE" is set in at least one of FLAG1 and FLAG2 or not is determined. Since FLAG1 has been rewritten to "FALSE" in step S7 and FLAG2 has been rewritten to "TRUE" in step S9, it is determined in step S5 that "TRUE" is set in at least one of FLAG1 and FLAG2. The program advances to step S6 where the automatic fan control on the blower 5 is performed. After that, the program returns to step S2. When the vehicle speed is equal to or higher than the predetermined value as described above, also in the case where the engine speed is lower than the predetermined value, the automatic fan control on the blower 5 is performed. Consequently, even when the engine speed sensor 19 becomes faulty or short-circuited, the automatic fan control on the blower 5 can be maintained, and the temperature in the vehicle can be maintained at which the passenger feels comfortable.

When it is determined in step S2 that the engine speed is lower than the predetermined value and it is determined in step S8 that the vehicle speed is lower than the predetermined value, the program shifts to step S5 where whether "TRUE" is set in at least one of FLAG1 and FLAG2 or not is determined. Since FLAG1 has been rewritten to "FALSE" in step S7 and FLAG2 has been rewritten to "TRUE" in step S9 in the previous routine, it is determined in step S5 that "TRUE" is set in at least one of FLAG1 and FLAG2, the program shifts to step S6 where the automatic fan control on the blower 5 is performed, and the program returns to step S2. After FLAG2 is rewritten to "TRUE" as described above, irrespective that the vehicle speed is equal to or higher than the predetermined value, the automatic fan control on the blower 5 is maintained. Consequently, also in the case where the engine speed sensor 19 is faulty or short-circuited and the vehicle temporarily stops at traffic lights or due to a traffic jam after the driving, the automatic fan control on the blower 5 does not stop and the in-vehicle temperature can be maintained so that the passenger feels comfortable.

Although not shown in the flowchart of Fig. 3, when the ignition key is turned off to thereby stop the engine, both FLAG1 and FLAG2 in the memory 24 are rewritten to "FALSE". In this case, it is determined in step S2 that the engine speed is lower than the predetermined value, it is determined in step S4 that "TRUE" is not set in FLAG1, and it is determined in step S8 that the vehicle speed is lower than the predetermined value. It is therefore determined in step S5 that "TRUE" is not set in both FLAG1 and FLAG2. The program advances to step S10 where the automatic fan control on the blower 5 is stopped. In this state, therefore, even when the ignition key is operated to turn on the accessory switch Acc, the automatic fan controller is not started. The inside of the vehicle can be therefore kept quiet, so that the passengers can listen to the radio or CD or have conversation with each other in the stopped vehicle without being bothered by noise.

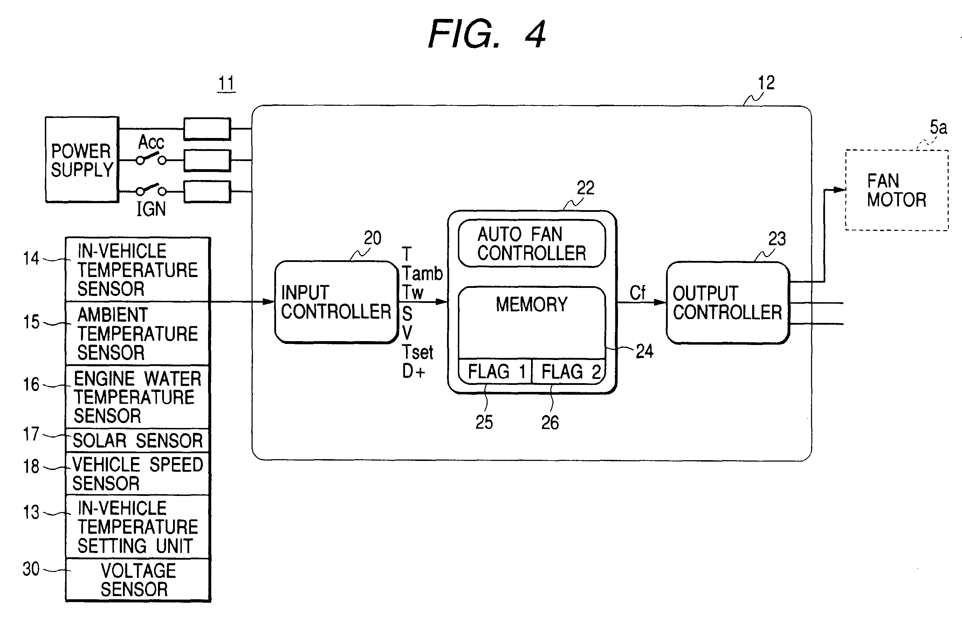

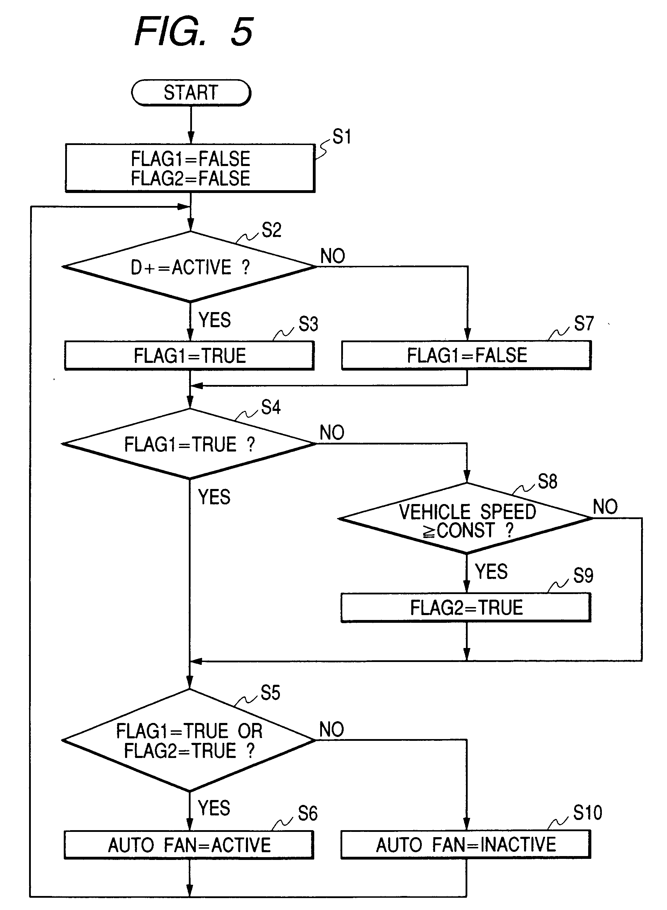

An air conditioner as a second embodiment of the invention will now be described with reference to Figs. 4 and 5. Fig. 4 is a block diagram of a controller and Fig. 5 is a flowchart showing the procedure of controlling the blower.

As shown in Fig. 4, the control section 11 of the fan motor 5a includes the controller 12, in-vehicle temperature setting unit 13, in-vehicle temperature sensor 14, ambient temperature sensor 15, engine water temperature sensor 16, solar sensor 17, vehicle speed sensor 18, and a voltage sensor 30 for sensing a voltage D+ generated by a dynamometer mounted on the vehicle. The controller 12 has: the input controller 20 for receiving output signals from the in-vehicle temperature setting unit 13 and the sensors 14 to 18 and 30 ; the computing unit 22 for receiving the set temperature Tₛₑₜ, in-vehicle temperature T, ambient temperature T_{amb}, engine water temperature T_{w}, sun load S, and vehicle speed V outputted from the input controller 20, calculating the drive voltage Cf of the fan motor 5a, receiving sensor outputs of the voltage sensor for sensing the generated voltage D+ and the vehicle speed V outputted from the input controller 20, and starting the control on the blower 5; and the output controller 23 for outputting the drive voltage of the fan motor 5a in accordance with the output signal of the computing unit 22. The other configuration is similar to that of the air conditioner for a vehicle according to the first embodiment.

In the air conditioner for a vehicle according to the second embodiment, the blower 5 is controlled so as to follow the procedure shown in Fig. 5. As obviously understood from the comparison between Fig. 5 and Fig. 3, the control procedure in Fig. 5 is different from that in Fig. 3 with respect to only the following point. In the control procedure of the blower 5 according to the first embodiment shown in Fig. 3, whether the engine speed is equal to or higher than the predetermined value is determined in step S2. In contrast, in the second embodiment, whether the voltage D+ generated by the dynamometer is equal to or higher than a predetermined value is determined. The air conditioner for a vehicle of the second embodiment has therefore the same effect as that of the air conditioner for a vehicle of the first embodiment.

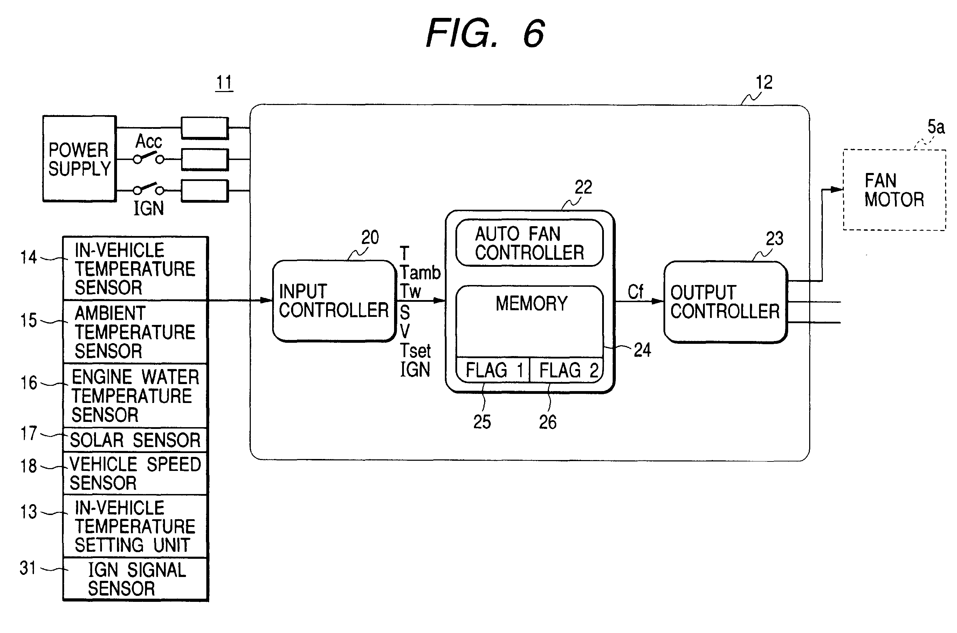

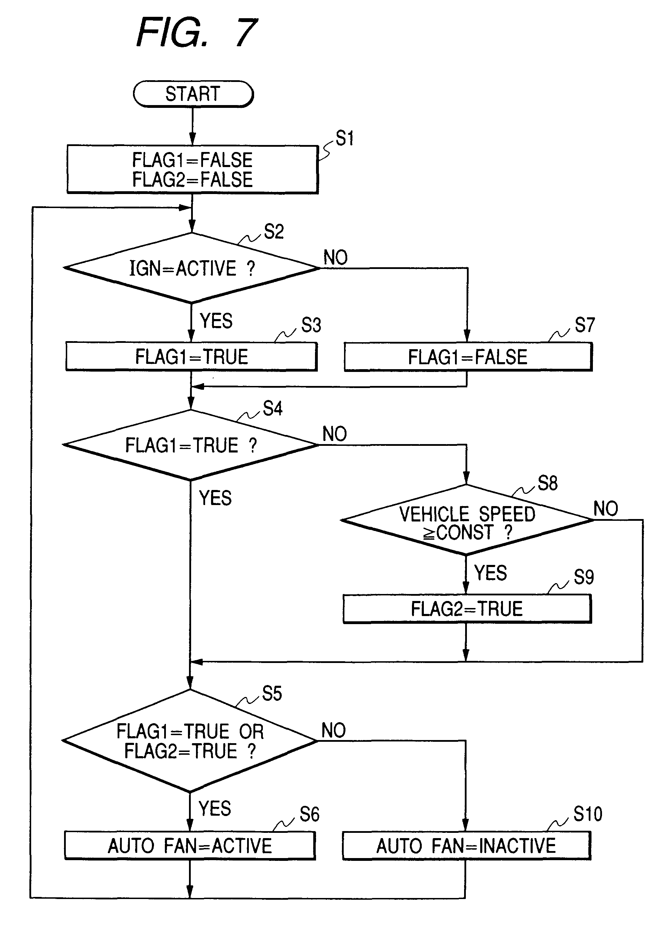

An air conditioner for a vehicle according to a third embodiment of the invention will now be described with reference to Figs. 6 and 7. Fig. 6 is a block diagram of a controller and Fig. 7 is a flowchart showing the procedure of controlling the blower.

As shown in Fig. 6, the control section 11 of the fan motor 5a includes the controller 12, in-vehicle temperature setting unit 13, in-vehicle temperature sensor 14, ambient temperature sensor 15, engine water temperature sensor 16, solar sensor 17, vehicle speed sensor 18, and an ignition signal sensor 31 for sensing an ignition ON signal IGN outputted from an ignition switch IGN mounted on the vehicle. The controller 12 has: the input controller 20 for receiving the output signals from the in-vehicle temperature setting unit 13 and the sensors 14 to 18 and 31; the computing unit 22 for receiving the set temperature Tₛₑₜ, in-vehicle temperature T, ambient temperature T_{amb}, engine water temperature T_{w}, sun load S, and vehicle speed V outputted from the input controller 20, calculating the drive voltage Cf of the fan motor 5a, receiving the ignition ON signal IGN and the sensor outputs of the vehicle speed V outputted from the input controller 20, and starting the control on the blower 5; and the output controller 23 for outputting the drive voltage of the fan motor 5a in accordance with the output signal of the computing unit 22. The other configuration is similar to that of the air conditioner for a vehicle according to the first embodiment.

In the air conditioner for a vehicle according to the third embodiment, the blower 5 is controlled so as to follow the procedure shown in Fig. 7. As obviously understood from the comparison between Fig. 7 and Fig. 3, the control procedure in Fig. 7 is different from that in Fig. 3 with respect to only the following point. In the control procedure of the blower 5 according to the first embodiment shown in Fig. 3, whether the engine speed is equal to or higher than the predetermined value in step S2 is determined. In contrast, in the third embodiment, the presence or absence of the ON signal of the ignition switch IGN is determined. In this case as well, although not shown in the flowchart of Fig. 7, when the ignition switch IGN is turned off, "FALSE" is automatically set in FLAG1 and FLAG2. Therefore, the air conditioner of the third embodiment has the same effect as that of the air conditioner of the first embodiment.

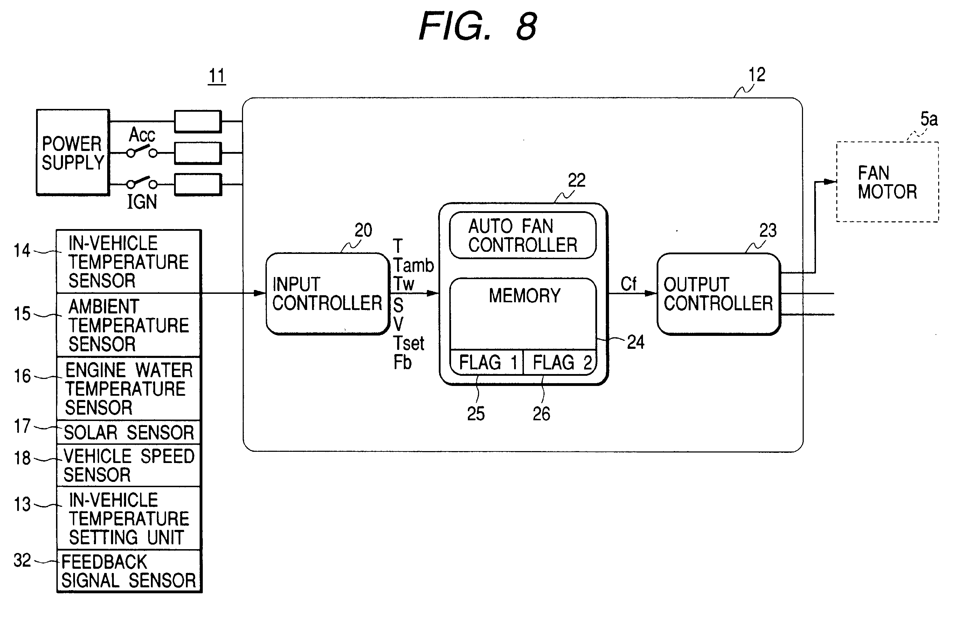

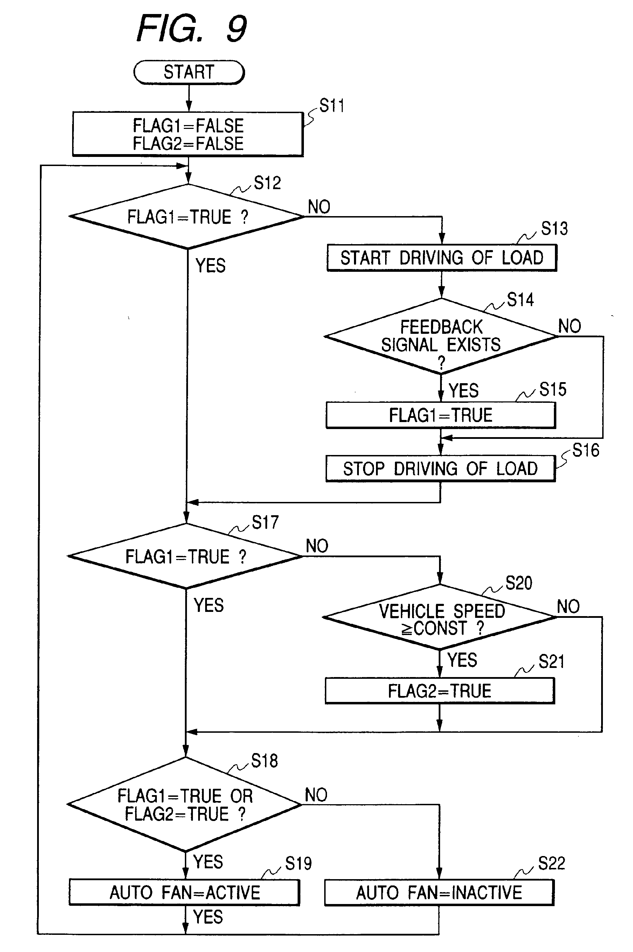

An air conditioner for a vehicle according to a fourth embodiment of the invention will now be described with reference to Figs. 8 and 9. Fig. 8 is a block diagram of a controller and Fig. 9 is a flowchart showing the procedure of controlling a blower.

As shown in Fig. 8, the control section 11 of the fan motor 5a includes the controller 12, in-vehicle temperature setting unit 13, in-vehicle temperature sensor 14, ambient temperature sensor 15, engine water temperature sensor 16, solar sensor 17, vehicle speed sensor 18, and a feedback signal sensor 32 for sensing a feedback signal Fb outputted from a load device such as an AC relay or heater relay connected to the power supply of the ignition switch IGN. The controller 12 has: the input controller 20 for receiving the output signals from the in-vehicle temperature setting unit 13 and the sensors 14 to 18 and 32; the computing unit 22 for receiving the set temperature Tₛₑₜ, in-vehicle temperature T, ambient temperature T_{amb}, engine water temperature T_{w}, amount S of solar radiation, and vehicle speed V outputted from the input controller 20, calculating the drive voltage Cf of the fan motor 5a, receiving the sensor outputs of the feedback signal Fb and the vehicle speed V outputted from the input controller 20, and starting the control on the blower 5; and the output controller 23 for outputting the drive voltage of the fan motor 5a in accordance with the output signal of the computing unit 22. The other configuration is similar to that of the air conditioner for a vehicle according to the first embodiment.

Referring to Fig. 9, the procedure of the control on the blower 5 performed by detecting the feedback signal Fb and the vehicle speed V will be described hereinbelow.

When the ignition key of the vehicle is in the OFF state, "FALSE" is set in both FLAG1 and FLAG2 (step S11). When the ignition key of the vehicle is operated to turn on the accessory switch Acc, the control program for the blower 5 written in the memory 24 is started and whether "TRUE" is set in FLAG1 or not is determined (step S12). When the ignition key is in the OFF state, "FALSE" is set in FLAG1 and FLAG2 in step S11. Consequently, it is determined in step S12 that "TRUE" is not set in FLAG1, and the program advances to step S13. In step S13, after the ignition switch IGN is turned on, driving of the load device is started. In step S14, the presence or absence of the feedback signal Fb from the load device is determined. When the presence of the feedback signal Fb is determined in step S14, the program shifts to step S15 where FLAG1 is rewritten to "TRUE", and the driving of the load device is stopped in the following step S16. Subsequently, the program moves to step S17 where whether "TRUE" is set in FLAG1 or not is determined. Since FLAG1 has been rewritten to "TRUE" in step S15, it is determined in step S17 that "TRUE" is set in FLAG1, and the program shifts to step S18. In step S18, whether or not "TRUE" is set in at least one of FLAG1 and FLAG2 is determined. Since FLAG1 has been rewritten to "TRUE" in step S15, it is determined in step S18 that "TRUE" is set in at least one of FLAG1 and FLAG2, the program advances to step S19 where the automatic fan control on the blower 5 is performed, and the program returns to step S12. When the ignition switch is turned on to start the engine as described above, irrespective of the vehicle speed, the automatic fan control on the blower 5 is performed.

In step S12 in the routine of this time, since FLAG1 has been rewritten to "TRUE" in step S15 in the previous routine, it is determined that "TRUE" is set in FLAG1, and the program advances to step S17. In step S17 as well, it is determined that "TRUE" is set in FLAG1, and the program advances to step S18. In step S18, it is determined that "TRUE" is set in at least one of FLAG1 and FLAG2, and the program shifts to step S19 where the automatic fan control on the blower 5 is performed, and returns to step S12. As described above, after the ignition switch IGN is turned on once to start the engine, FLAG1 is rewritten to "TRUE" . Also in the case where the feedback signal sensor 32 becomes faulty or short-circuited after that and the vehicle temporarily stops at traffic lights or due to a traffic jam after the driving, the automatic fan control on the blower 5 is not stopped, and the in-vehicle temperature can be maintained so that the passenger feels comfortable.

In the case where it is determined in step S17 that "TRUE" is not set in FLAG1, the program shifts to step S20. In step S20, whether the vehicle speed is equal to or higher than the predetermined value is determined. When it is determined the vehicle speed is higher than the predetermined value, the program moves to step S21 where FLAG2 is rewritten to "TRUE". Subsequently, the program shifts to step S18 where whether "TRUE" is set in at least one of FLAG1 and FLAG2 is determined. Since FLAG2 has been rewritten to "TRUE" in step S21, it is determined in step S18 that "TRUE" is set in at least one of FLAG1 and FLAG". The program advances to step S19 where the automatic fan control on the blower 5 is performed, and returns to step S2. As described above, when the vehicle speed is equal to or higher than the predetermined value, even when there is no feedback signal Fb, the automatic fan control on the blower 5 is performed. Consequently, also in the case where the feedback signal sensor 32 becomes faulty or short-circuited, the automatic fan control on the blower 5 can be maintained, and the in-vehicle temperature can be maintained so that the passenger feels comfortable.

Although not shown in the flowchart of Fig. 9, when the ignition key is turned off to stop the engine, both FLAG1 and FLAG2 in the memory 24 are rewritten to "FALSE". In this case, it is determined in step S12 that "TRUE" is not set in FLAG1 and, further, it is determined in step S20 that the vehicle speed is lower than the predetermined value. Consequently, it is determined in step S18 that "TRUE" is not set in both FLAG1 and FLAG2. The program advances to step S22 where the automatic fan control on the blower 5 is stopped. In this state, therefore, even when the ignition key is operated to turn on the accessory switch Acc, the automatic fan controller is not started. The inside of the vehicle can be therefore kept quiet, so that the passengers can listen to the radio or CD or have conversation with each other in the stopped vehicle.

In the first embodiment, the control on the blower 5 is performed on the basis of the vehicle speed and the engine speed. In the second embodiment, the control on the blower 5 is performed on the basis of the vehicle speed and the voltage generated by the dynamometer. In the third embodiment, the control on the blower 5 is performed on the basis of the vehicle speed and the ignition signal. In the fourth embodiment, the control on the blower 5 is performed on the basis of the vehicle speed and the feedback signal from the load device. The control of the blower 5 can be also performed on the basis of a combination of the vehicle speed and two or more factors selected from the engine speed, voltage generated by the dynamometer, ignition signal, and the feedback signal.

As described above, according to the invention, the automatic fan control on the blower is executed by determining the engine start conditions and the vehicle driving conditions. Consequently, even when a failure or short circuit occurs in the sensors for sensing the engine start conditions, the automatic fan control can be performed on the blower, and warm air or cold air of the flow rate according to the calculated outlet temperature can be supplied to the inside of the vehicle. Thus, the inside of the vehicle can be maintained to be comfortable.

The determining means for determining whether the stop or deceleration of the vehicle is a temporary stop during drive or a stop by stopping the engine is provided. When the temporary stop is determined, the automatic fan control on the blower is continued. When the stop state by the engine stop is determined, the automatic fan control on the blower is stopped. In such a case, the automatic fan control on the blower is not stopped each time the vehicle stops at traffic lights, due to a traffic jam, or the like. Thus, comport in the vehicle can be further increased.

## Claims

1. An air conditioner for a vehicle, comprising:
a blower provided in an air conditioning duct of a vehicle;
an engine speed sensor for detecting a rotational speed of an engine mounted on the vehicle;
a vehicle speed sensor for detecting a speed of the vehicle; and
a controller for receiving output signals from the sensors and performing an automatic fan control on the blower,
wherein the controller determines whether the engine speed is equal to or higher than a predetermined value and determines whether the vehicle speed is equal to or higher than a predetermined value, in each of the case where the engine speed is equal to or higher than the predetermined value and the vehicle speed is equal to or higher than the predetermined value, the case where the engine speed is equal to or higher than the predetermined value and the vehicle speed is lower than the predetermined value, and the case where the engine speed is lower than the predetermined value and the vehicle speed is equal to or higher than the predetermined value, the automatic fan control on the blower is started, and in the case where the engine speed is lower than the predetermined value and the vehicle speed is lower than the predetermined value, the automatic fan control on the blower is stopped.

2. An air conditioner for a vehicle, comprising:
a blower provided in an air conditioning duct of a vehicle;
a voltage sensor for detecting a voltage generated by a dynamometer mounted on the vehicle;
a vehicle speed sensor for detecting a speed of the vehicle; and
a controller for receiving output signals from the sensors and performing an automatic fan control on the blower,
wherein the controller determines whether the generated voltage is equal to or higher than a predetermined value and determines whether the vehicle speed is equal to or higher than a predetermined value, in each of the case where the generated voltage is equal to or higher than the predetermined value and the vehicle speed is equal to or higher than the predetermined value, the case where the generated voltage is equal to or higher than the predetermined value and the vehicle speed is lower than the predetermined value, and the case where the generated voltage is lower than the predetermined value and the vehicle speed is equal to or higher than the predetermined value, the automatic fan control on the blower is started, and in the case where the generated voltage is lower than the predetermined value and the vehicle speed is lower than the predetermined value, the automatic fan control on the blower is stopped.

3. An air conditioner for a vehicle, comprising:
a blower provided in an air conditioning duct of a vehicle;
an ignition signal sensor for detecting an ON signal of an ignition switch mounted on the vehicle;
a vehicle speed sensor for detecting a speed of the vehicle; and
a controller for receiving output signals from the sensors and performing an automatic fan control on the blower,
wherein the controller determines the presence or absence of the ON signal of the ignition switch and whether the vehicle speed is equal to or higher than a predetermined value, in each of the case where the ON signal of the ignition switch is detected and the vehicle speed is equal to or higher than the predetermined value, the case where the ON signal of the ignition switch is detected and the vehicle speed is lower than the predetermined value, and the case where the ON signal of the ignition switch is not detected and the vehicle speed is equal to or higher than the predetermined value, the automatic fan control on the blower is started, and in the case where the ON signal of the ignition switch is not detected and the vehicle speed is lower than the predetermined value, the automatic fan control on the blower is stopped.

4. An air conditioner for a vehicle, comprising:
a blower provided in an air conditioning duct of a vehicle;
an ignition switch mounted on a vehicle and a load device connected to a power supply of the ignition switch;
a feedback signal sensor for detecting the presence or absence of a feedback signal outputted from the load device when the ignition switch is turned on;
a vehicle speed sensor for detecting a speed of the vehicle; and
a controller for receiving output signals from the sensors and performing an automatic fan control on the blower,
wherein the controller determines the presence or absence of the feedback signal and whether the vehicle speed is equal or higher than a predetermined value, in each of the case where the feedback signal is detected and the vehicle speed is equal to or higher than the predetermined value, the case where the feedback signal is detected and the vehicle speed is lower than the predetermined value, and the case where the feedback signal is not detected and the vehicle speed is equal to or higher than the predetermined value, the automatic fan control on the blower is started, and in the case where the feedback signal is not detected and the vehicle speed is lower than the predetermined value, the automatic fan control on the blower is stopped.

5. The air conditioner for a vehicle according to any of claims 1 4, further comprising determining means for determining, when the vehicle speed becomes lower than the predetermined value, whether it is due to a temporary stop during drive or a stop by stopping the engine, when the temporary stop is determined, the automatic fan control on the blower is continued, and when the stop by the engine stop is determined, the automatic fan control on the blower is stopped.
